# EUROPEAN PATENT APPLICATION

(11) **EP 4 683 026 A2**
(43) Date of publication of application: **21.01.2026**
(21) Application number: 24819592.7
(22) Date of filing: 07.06.2024
(51) Int. Cl.: H01M 10/052, H01M 10/04, H01M 10/0585, H01M 50/211, H01M 50/105, H01M 50/258, H01M 10/44, H01M 4/04

(54) **LITHIUM METAL BATTERY, AND BATTERY MODULE AND BATTERY PACK INCLUDING SAME**

(30) Priority: 07.06.2023 KR 20230073022; 05.06.2024 KR 20240073720
(71) Applicant: LG Energy Solution, Ltd., Seoul 07335 (KR)
(72) Inventor: KIM, Taejong, Daejeon 34122 (KR); LIM, Hunhee, Daejeon 34122 (KR); SHIN, Dongseok, Daejeon 34122 (KR); KIM, Soohyun, Daejeon 34122 (KR); LEE, Keonje, Daejeon 34122 (KR); CHO, Minjae, Daejeon 34122 (KR)
(74) Representative: Goddar, Heinz J.
(86) International application number: PCT/KR2024/007761
(87) International publication number: WO 2024/253441

(57) **Abstract**

A lithium metal battery according to one embodiment of the present disclosure comprises an electrode assembly including a positive electrode, a negative electrode, and a separator interposed between the positive electrode and the negative electrode; an electrolyte that impregnates the electrode assembly; and a battery case that incorporates the electrode assembly and the electrolyte, wherein the negative electrode comprises a negative electrode current collector and a lithium metal layer formed on at least one surface of the negative electrode current collector, and wherein the lithium metal battery is charged and discharged under a state where a pressure of 2 kgf/cm² or more and 30 kgf/cm² or less is applied thereto.

## Description

### [TECHNICAL FIELD]

### Cross Citation with Related Application(s)

This application claims the benefit of Korean Patent Application No. 10-2023-0073022 filed on June 7, 2023 and Korean Patent Application No. 10-2024-0073720 filed on June 5, 2024 in the Korean Intellectual Property Office, the disclosures of which are hereby incorporated by reference in their entirety.

The present disclosure relates to a lithium metal battery, and a battery module and a battery pack including the same, and more particularly, to a lithium metal battery characterized in that a predetermined pressure is applied to a lithium metal during charge and discharge of a lithium metal battery, and a battery module and a battery pack including the same.

### (BACKGROUND]

The demand for secondary batteries as energy sources has increased rapidly, and among such secondary batteries, lithium secondary batteries, which exhibit high energy density and operating potential, long cycle lifetime and low self-discharge rate, are commercialized and widely used.

Representatively, with regard to the shape of batteries, there is a high demand for prismatic secondary batteries and pouch type secondary batteries, which are thin and thus may be applied to products such as, for example, portable phones. In addition, from the aspect of materials, there is a high demand for lithium secondary batteries such as, for example, lithium ion batteries and lithium ion polymer batteries, which have a high energy density, discharge voltage, and output stability.

Generally, a lithium secondary battery has a structure in which a non-aqueous electrolytic solution is impregnated into an electrode assembly including a positive electrode, a negative electrode and a porous separator. Also, the positive electrode is generally manufactured by coating a positive electrode mixture including a positive electrode active material onto an aluminum foil, and the negative electrode is manufactured by coating a negative electrode mixture including a negative electrode active material onto a copper foil.

The positive electrode active material is a lithium transition metal oxide, and the negative electrode active material is a carbon-based material. Recently, however, a lithium metal battery, which uses lithium metal itself exhibiting high energy density as the negative electrode active material, has been commercialized.

At this time, the lithium metal used as the negative electrode is a material which is most highlighted as a negative electrode material for a high energy density battery because it has a low density (0.54 g/cm³) and a very low standard reduction potential (-3.045V SHE). In addition, despite the problems that arise due to their high chemical activity, with the continuous increase and rapid development of the use of mobile communication and portable electronic devices in recent years, the demand for the development of high energy density secondary batteries is continuously increasing. Thus, a necessity for the use of lithium metal negative electrodes is continuously rising.

In this case, when a lithium metal electrode is used as the negative electrode, unlike a lithium ion battery, lithium metal is vapor-deposited or disappears during charging and discharging and thus, the thickness change of the lithium ion battery versus battery cell is relatively larger. When lithium is charged, a porous layer may be formed due to the occurrence of needle-like lithium where electrodeposition is concentrated locally. This may increase the resistance of the battery and even cause an internal short circuit, thereby lowering the stability of the battery. When lithium is discharged, the separator and the negative electrode interface grows apart from each other, thereby increasing the resistance. Due to this repeated deformation caused by charging and discharging, internal elements deteriorate, which causes problems such as shortening the charge-discharge cycle life.

Therefore, there is a need to develop a lithium metal battery that solve these problems, a battery module and a battery pack including the same.

### [DETAILED DESCRIPTION OF THE INVENTION]

### [Technical Problem]

It is an object of the present disclosure to provide a lithium metal battery having improved stability during operation and increased lifetime, and a battery module and a battery pack including the same.

However, the technical object of the present disclosure is not limited to the aforementioned one, and may be extended in various ways within the scope of the technical idea included in the present disclosure.

### [Technical Solution]

According to one embodiment of the present disclosure, there is provided a lithium metal battery, comprising: an electrode assembly including a positive electrode, a negative electrode, and a separator interposed between the positive electrode and the negative electrode; an electrolyte that impregnates the electrode assembly; and a battery case that incorporates the electrode assembly and the electrolyte, wherein the negative electrode comprises a negative electrode current collector and a lithium metal layer formed on at least one surface of the negative electrode current collector, and wherein the lithium metal battery is charged and discharged under a state where a pressure of 2 kgf/cm² or more and 30 kgf/cm² or less is applied thereto.

Pressure is applied to the lithium metal battery by a constant-position pressurization method, and the pressure applied to the lithium metal battery may be 7 kgf/cm² or more and less than 12 kgf/cm².

The pressure applied to the lithium metal battery may be 8 kgf/cm² or more and 11 kgf/cm² or less.

Pressure is applied to the lithium metal battery by a constant-variable pressure pressurization method, and the pressure applied to the lithium metal battery may be 4 kgf/cm² or more and 30 kgf/cm² or less.

The pressure applied to the lithium metal battery may be 5 kgf/cm² or more and 25 kgf/cm² or less.

The equivalent spring constant of the elastic member applied to the constant-variable pressure pressurization method may be 60 kgf/mm or more and 1000 kgf/mm or less.

Pressure is applied to the lithium metal battery by a constant-pressure pressurization method, and the pressure applied to the lithium metal battery may be 10 kgf/cm² or more and 30 kgf/cm² or less.

Pressure is applied to the lithium metal battery by a constant-pressure pressurization method, and the pressure applied to the lithium metal battery may be 10 kgf/cm² or more and 25 kgf/cm² or less.

The lithium metal battery may be a pouch-type lithium metal battery.

The lithium metal battery is mounted on a pressurizing jig, and pressure may be applied by the pressurizing jig.

According to another embodiment of the present disclosure, there is provided a battery module comprising: a battery cell stack in which a plurality of battery cells are stacked; and a module case that houses the battery cell stack, wherein the battery cell is the above-mentioned lithium metal battery.

When the pressurizing method for the lithium metal battery is a constant-pressure pressurization method, within the module case, a pressurizing member in which the distance from the large area of the battery cell is variably installed, a driving unit capable of moving the pressurizing member, a measuring unit that measures the pressure applied to the pressurizing member, and a control unit that receives input of data measured from the measuring unit and adjusts the pressure applied to the pressurizing member to a constant level are further comprised.

When the pressurizing method for the lithium metal battery is a constant-variable pressure pressurization method, an elastic member is further comprised within the module case.

According to yet another embodiment of the present disclosure, there is provided a battery pack comprising the battery module according to the above-mentioned embodiment, and a pack case that houses the battery module.

### [Advantageous Effects]

According to the present disclosure, a lithium metal battery having improved stability during operation and increased lifetime according to the pressurization conditions during charging and discharging, and a battery module and a battery pack including the same can be provided.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a drawing schematically illustrating a constant-position pressurization method;
FIG. 2 is a drawing schematically illustrating a constant-pressure pressurization method;
FIG. 3 is a drawing schematically illustrating a constant-variable pressure pressurization method;
FIG. 4 is graphs showing the discharge capacity and C/E (coulombic efficiency) measured each time per charge/discharge cycle by changing the pressure applied to the battery cell in Example 1 and Comparative Example 1 of the present disclosure;
FIG. 5 is graphs showing the results of measuring the voltage value between the positive and negative electrodes of the battery cell versus the discharge capacity of the battery cell by changing the number of charge/discharge cycles;
FIGS. 6 to 8 are graphs showing the results of tests conducted by changing the pressure applied to the battery cell in the case of the constant-position pressurization method;
FIGS. 9 to 11 are graphs showing the results of tests conducted by changing the pressure applied to the battery cell in the case of the constant-variable pressure pressurization method; and
FIGS. 12 to 14 are graphs showing the results of tests conducted by changing the pressure applied to the battery cell in the case of a constant-pressure pressurization method.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Further, throughout the description, when a portion is referred to as "including" or "comprising" a certain component, it means that the portion can further include other components, without excluding the other components, unless otherwise stated.

A lithium metal battery according to one embodiment of the present disclosure comprises an electrode assembly including a positive electrode, a negative electrode, and a separator interposed between the positive electrode and the negative electrode; an electrolyte that impregnates the electrode assembly; and a battery case that incorporates the electrode assembly and the electrolyte. The negative electrode comprises a negative electrode current collector and a lithium metal layer formed on at least one surface of the negative electrode current collector.

As mentioned above, conventional lithium metal batteries may be problematic in that during charging, needle-like lithium is formed where electrodeposition is concentrated locally, and during discharging, resistance increases and discharge capacity decreases due to the phenomenon where the separator and the negative electrode interface grows apart from each other. There also are problems that this repeated deformation caused by charging and discharging deteriorates the internal components and shortens the charge and discharge cycle life.

To improve such problems, the lithium metal battery of the present disclosure is charged and discharged under a state of being pressurized at a predetermined pressure. In the case of pressurizing in conformity with the speed at which lithium metal grows and disappears, the performance of the lithium metal battery is improved.

In the lithium metal battery of the present disclosure, a pressure of 2 kgf/cm² or more and 30 kgf/cm² or less is applied to the battery cell during charging and/or discharging.

In the case of the constant-position pressurization method, the pressure applied to the lithium metal battery may be 7 kgf/cm² or more and less than 12 kgf/cm², or 8 kgf/cm² or more and 11 kgf/cm² or less.

In the case of the constant-variable pressure pressurization method, the pressure applied to the lithium metal battery may be 4 kgf/cm² or more and 30 kgf/cm² or less, or 5 kgf/cm² or more and 25 kgf/cm² or less. The spring constant of the elastic member applied to the constant-variable pressure pressurization method may be 60 kgf/mm or more and 1000 kgf/mm or less.

In the case of the constant-pressure pressurization method, the pressure applied to the lithium metal battery may be 10 kgf/cm² or more and 30 kgf/cm² or less, or 10 kgf/cm² or more and 25 kgf/cm² or less.

As used herein, 'pressure is applied to a lithium metal secondary battery' means that pressure is applied in the thickness direction of the lithium metal secondary battery or to the large-area surface thereof. During charge and discharge of a lithium metal battery, it is necessary to maintain a prescribed pressure or more. Since lithium metal is generated and grows during charging, pressure is required to apply pressure to the lithium metal battery and prevent it from growing into a porous shape. During discharging, lithium metal is consumed and may become locally porous shape, and therefore, even in such a case, pressure is applied to the lithium metal battery.

On the other hand, when the pressure applied to the battery cell during charging satisfies the conditions according to the embodiments of the present disclosure, while effectively preventing localized electrodeposition of lithium that may occur during charging, electrolyte leakage due to excessive pressure, increase in battery cell resistance, compression of the separator, and the like do not occur, so that the safety of the battery cell can be secured.

In addition, when the pressure applied to the battery cell during discharge satisfies the conditions according to the embodiments of the present disclosure, the space between the separator and the negative electrode interface can be minimized, thereby reducing the resistance of the battery cell and preventing a decrease in the discharge capacity.

The 'charging and discharging' as used herein refers not only to the charging and discharging that occurs during the manufacturing process of the battery cell (e.g., the activation process, etc.), but also to all charging and discharging that occurs during the actual use of the product, including the battery cell, after the battery cell product is shipped.

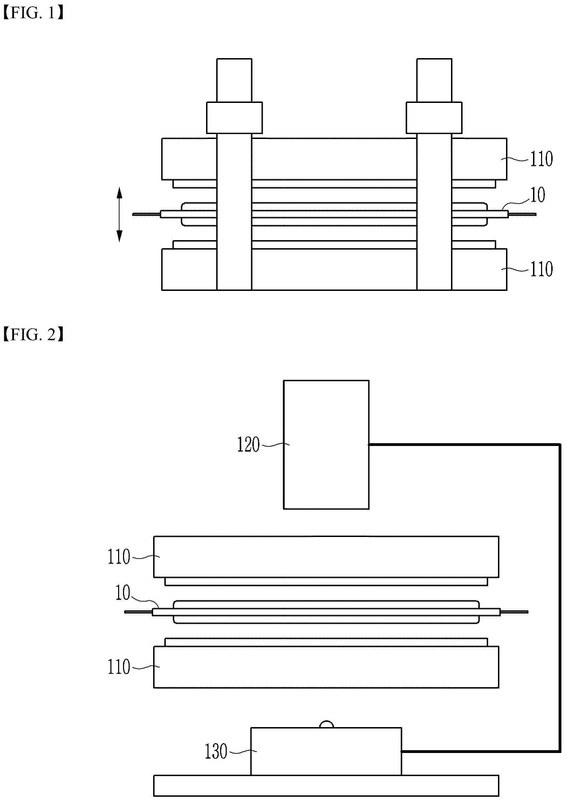

The pressurizing method for such lithium metal batteries include three types: a constant-position pressurization method, a constant-pressure pressurization method, and a constant-variable pressure pressurization method, and these can be realized as a pressurization jig, a battery module, and/or a battery pack. FIGS. 1, 2 and 3 are diagrams schematically illustrating the constant-position, constant-pressure, and constant-variable pressurization methods, respectively.

The constant-position pressurization method of FIG. 1 is a method in which the distance (interval) between the pressurizing members 110 on both sides with the battery cell 10 in between is maintained constantly. For example, in the manufacturing process of a battery cell, the distance between the pressurizing jigs may be constant. Alternatively, it may be a typical battery module case and/or battery pack case. In this case, it corresponds to the case where the distance between the frames (housings) of the battery module or battery pack in which the battery cells are housed is constant during actual use of the product mounted with a battery cell.

The distance between the pressurizing members 110 is maintained constantly, whereby as the lithium metal battery expands during charging, a large pressure may be applied to the battery cell 10 in some cases. Alternatively, even though the distance between the separator and the negative electrode interface gradually grows apart during discharging, the distance between the pressurizing members 110 on both sides of the battery cell remains constant and thus, a situation may occur where pressure is not applied as much as necessary during discharging. Therefore, only the constant-position pressurization method may be applied during charging and discharging, but as a method in which a degree of pressure change is small, a constant-pressure pressurization method and a constant-variable pressure pressurization method described below can also be used in combination.

The constant-pressure pressurization method of FIG. 2 is a method of controlling the pressure applied by the pressurizing member 110 so as to be maintained constantly. That is, this is a method in which a constant value of pressure is applied to the battery cell 10 by a pressurizing member 110. For example, in the manufacturing process of a battery cell, it may be a case where a constant value of pressure is applied to the pressurizing jig. In the actual use of a product mounted with a battery cell, a constant value of pressure may be applied to the battery cell from the inside and/or outside of the frame (housing) of the battery module or battery pack in which the battery cells are housed.

When the constant-pressure pressurization method is applied, it includes a mechanical device that adjusts pressure according to the degree of tightening in order to maintain constant pressure. During charging, the pressure can be maintained by releasing the tightening at the pressurizing position to the battery cell 10, and during discharging, the pressure can be maintained in such a way to increase the degree of tightening at the pressurizing position and further apply pressure. For example, the battery module and/or battery pack according to the present disclosure may include pressurizing members 110 that are provided on both sides of the battery cell 10 with the battery cell 10 in between and mounted so as to have a variable distance from the large area of the battery cell 10, a driving unit 120 that can move the pressurizing member 110, a measuring unit 130 that measures the pressure applied to the pressurizing member, a control unit (not shown) that receives input of data measured from the measuring unit and adjusts the pressure applied to the pressurizing member so as to be constant, and the like. The driving unit 120 may be, for example, a motor (servo motor, etc.), and the measuring unit 130 may be, for example, a load cell.

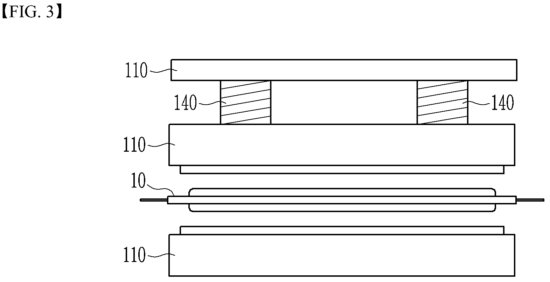

The constant-variable pressure pressurization method of FIG. 3 is a case where the constant-position pressurization method is partially modified, wherein the distance (interval) between the pressurizing members 110 on both sides of the battery cell 10 in between is maintained constantly, and an elastic member 140 is interposed between one surface or both surfaces of the pressurizing member 110 and the battery cell 10. That is, this is the case where the total sum of the pressurizing force by the pressurizing member 110 and the elastic force by the elastic member 140 is applied to the battery cell 10.

The elastic member 140 may be, for example, a spring. In order to obtain the desired elastic force, an elastic member 140 having an appropriate elastic coefficient may be used, or a method of changing the number of elastic members 140 mounted may be applied, or a combination thereof may also be applied.

The equivalent spring constant of the elastic member 140 may be, for example, 60 kgf/mm or more and 1000 kgf/mm or less.

More specifically, in the case of a small-sized battery cell, the equivalent spring constant of the elastic member 140 may be, for example, 60 kgf/mm or more and 300 kgf/mm or less, or 60 kgf/mm or more and 200 kgf/mm or less, or may be, for example, 160 kgf/mm. For example, four elastic members 140 having a spring constant of 40 kgf/mm may be arranged at each corner of one side surface of a battery cell, a battery module, or a battery pack and connected in parallel, thereby achieving the equivalent spring constant of 160 kgf/mm (40 kgf/mm × 4 = 160 kgf/mm).

In the case of medium- or large-sized battery cells, the equivalent spring constant of the elastic member 140 may be, for example, 200 kgf/mm or more and 1000 kgf/mm or less, or 300 kgf/mm or more and 1000 kgf/mm or less, or may be, for example, 480 kgf/mm. For example, when the size of the battery cell is 100 mm×300 mm, the equivalent spring constant may be, for example, 480 kgf/mm.

The spring constant may be selected appropriately in conformity with an environment in which the invention is realized, such as the size of the battery cell.

In addition, the elastic member 140 may directly contact the battery cell 10, but an auxiliary pressurizing member 110 may be further provided between the elastic member 140 and the battery cell 10, so that the auxiliary pressurizing member 110 contacts the battery cell 10, and the auxiliary pressurizing member 110 may be variable according to the elasticity of the elastic member 140.

When the constant-pressure pressurization method and/or the constant-variable pressure pressurization method are used, there is an advantage in that they can compensate for phenomena that may occur in the constant-position pressurization method. For example, it is possible to compensate for the increase in internal resistance of the battery caused by the compression of the separator, a micro-short phenomenon caused by allowing needle-like electrodeposited lithium metal to pierce the separator, and a crack phenomenon caused by the breakage of the positive electrode active material, and the like.

In the absence of a constant pressure jig, a battery module, and/or a battery pack which are provided with a mechanical device for maintaining constant pressure, the constant-variable pressure jig, battery module, and/or battery pack can be used, and in the case of hardly applying even with the constant-variable pressure method, the constant position jig, battery module, and/or battery pack can be used.

On the other hand, it can be realized by a combined method of at least two or more of the constant-position, constant-pressure, and constant-variable pressure pressurization methods.

In addition, the present disclosure is not limited to those described above, and can be applied in various environments, for example, the pressurization method can be realized with not only a jig pressurization method, but also a magnetic pressurization method, or a combination of these methods, depending on the type of the pressurizing member.

In the following, the present disclosure will be described in detail with reference to examples. However, the examples according to the present disclosure can be modified in various different forms, and the scope of the present disclosure should not be construed as being limited to the examples described below.

First, the lithium metal batteries used in the examples and comparative examples of the present disclosure are as follows.

### Lithium metal battery

About 95 weight parts of LiFePO₄ as a positive electrode active material, about 0.5 weight parts of CNT as a conductive material, and about 3 weight parts of polyvinylidene fluoride (PVDF) as a binder were added to N-methylpyrrolidone (NMP) as a solvent to prepare a positive electrode active material slurry. Next, the positive electrode active material slurry was coated to a thickness of 90 µm or more onto both surfaces of an aluminum current collector having a thickness of 10~ 20 µm, which was then dried, rolled, and cut into a predetermined size to prepare a positive electrode sheet. Further, a single-sided positive electrode sheet was obtained in the same manner as described above, except that the positive electrode active material slurry was coated on only one surface.

In addition, a lithium metal foil having a thickness of 30 µm or less was attached to both surfaces of a copper current collector having a thickness of 5~15 µm, to obtain a negative electrode sheet.

In addition, an electrode assembly was manufactured by using twenty(20) separators (porous coating layer formed from a mixture of alumina and PVDF binder was formed on both surfaces of a polyethylene-based porous polymer substrate), nine(9) double-sided positive electrode sheets, ten(10) double-sided negative electrode sheets, and two(2) double-sided negative electrode sheets on the outermost part.

Next, an electrolyte solution prepared by dissolving 1~4M LiFSI, LiTFSI, etc. in solvents of ether, carbonate and THP and adding a non-solvent was injected into a pouch of the battery cell. Then, the pouch was sealed completely to obtain a lithium metal battery.

### Evaluation of the cycle characteristics of lithium metal batteries

The lithium metal battery was charged to 3.6~3.8V under a constant-current/constant-voltage (CC/CV) condition at a constant current of 1~10 mA/cm². After completing charge with 0.05 C cut-off, the lithium metal battery was discharged (discharge temperature 25°C) to 2.6~2.8 V under a constant-current (CC) condition at a current density of 1~10 mA/cm². At this time, the lithium metal battery was pressurized at (a) a pressure of 8 kgf/cm² in the case of Example 1 and (b) a pressure of 1 kgf/cm² in the case of Comparative Example 1, respectively.

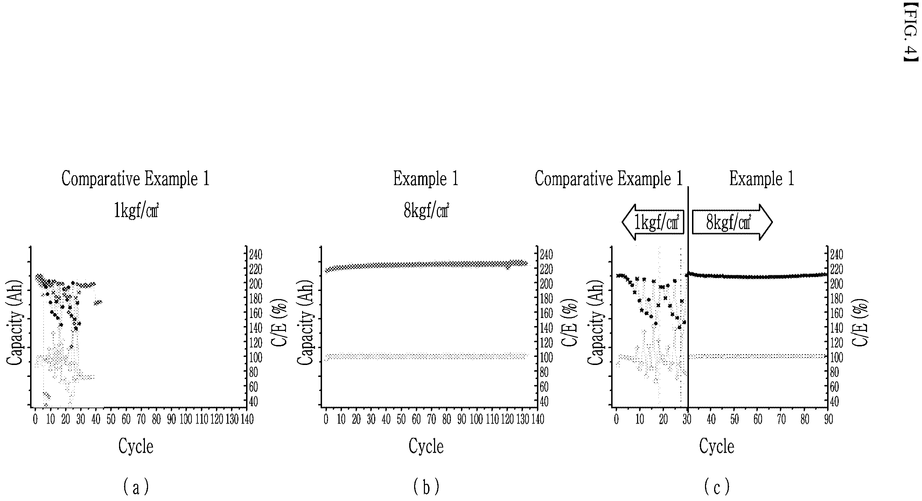

Under such conditions, the charge/discharge process was repeated several times, and the discharge capacity and C/E were respectively measured, and shown in FIG. 4. However, in Comparative Example 1, the battery cell could not be operated any longer due to a sudden deterioration in performance, etc. after the 30th cycle, and thus the evaluation was stopped. On the other hand, in Example 1 of the present disclosure, the discharge capacity and C/E were measured while repeating the charge/discharge process for 130 cycles or more.

FIG. 4 is graphs showing the discharge capacity and C/E(coulombic efficiency) measured each time per charge/discharge cycle by changing the pressure applied to the battery cell under the constant-position pressurization condition in Example 1 and Comparative Example 1 of the present disclosure;

FIG. 4(a) is a graph measured when a pressure of 1 kgf/cm² was applied to the battery cell as Comparative Example 1, and FIG. 4(b) is a graph measured when a pressure of 8 kgf/cm² was applied to the battery cell as Example 1 of the present disclosure. FIG. 4(c) is a graph that compares Example 1 and Comparative Example 1 of the present disclosure.

In each graph of FIGS. 4(a) to 4(c), the x-axis means the number of charge/discharge cycles, the y-axis on the left side means the discharge capacity, and the y-axis on the right side means C/E (coulombic efficiency), that is, the ratio of discharge capacity/charge capacity. The capacity in FIG. 4 represents the discharge capacity, which means the capacity when SOC goes from SOC100 (fully charged) to SOC0 (fully discharged). In the case of C/E, it represents whether the discharge capacity is properly exhibited as much as charged in the nth cycle, and C/E = (Discharge capacity after the nth cycle)/(Charge capacity after the nth cycle), where n is a natural number. In addition, the value at the top of the graph represents the measured discharge capacity value, and the value at the bottom represents the measured C/E value.

In the case of Example 1 of FIG. 4(b), where the battery cell was pressurized under a pressure of 8 kgf/cm², it was measured that the discharge capacity and C/E had high values and the values were substantially maintained even when the charge/discharge cycles were repeated.

On the other hand, in Comparative Example 1 of FIG. 4 (a), where the battery cell was pressurized under a pressure of 1 kgf/cm², it can be seen that the discharge capacity and C/E were measured as values having large deviations for each cycle when charge/discharge cycles were repeated. That is, it shows a fluctuating graph. This means that the stability of the battery cell is significantly lower. In addition, it can be seen that the discharge capacity value is lower as a whole compared to Example 1 of FIG. 4(b).

It can also be seen that in Comparative Example 1 of FIG. 4(a), the number of cycles is significantly lower than in Example 1 of FIG. 4(b) due to reasons such as deterioration of the battery cell. This means that the lifetime of the battery in Comparative Example 1 of FIG. 4(a) is significantly lower than in Example 1 of FIG. 4(b).

In summary, as can be seen in the comparison graph between Example 1 and Comparative Example 1 in FIG. 4(c), it is confirmed that in Example 1, not only the discharge capacity value is higher than in Comparative Example 1, but the discharge capacity and C/E value are constant even after charge/discharge cycles were repeated (i.e., the stability of the battery is significantly improved), and the number of charge/discharge cycles is also greater (i.e., the lifetime of the battery is longer).

For reference, in Comparative Example 1 of FIG. 4(a), the case of having a high fluctuation range of the C/E value was partially measured, which means that a micro-short occurred or deposition occurred on the positive electrode during discharging.

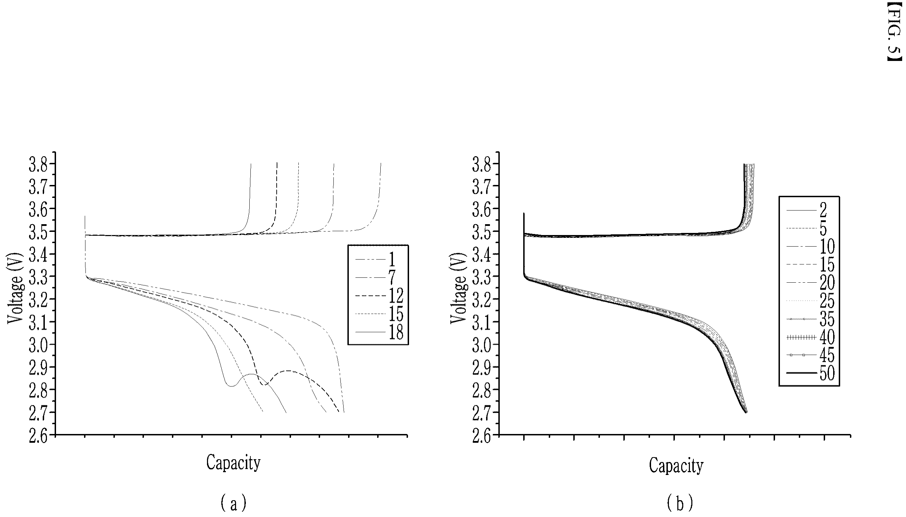

FIG. 5 is graphs showing the results of measuring the voltage value between the positive and negative electrodes of the battery cell versus the discharge capacity of the battery cell by changing the number of charge/discharge cycles under the same measurement conditions as FIG. 4. It is easy to check for abnormalities when checking the charge/discharge profile.

Comparative Example 1 of FIG. 5(a) is a case where the battery cell was pressurized under a pressure of 1 kgf/cm², Example of FIG. 5(b) is a case where the battery cell was pressurized under a pressure of 8 kgf/cm². In each graph of FIG. 5(a) and 5(b), the x-axis represents the discharge capacity and the y-axis represents the voltage. The value of the discharge capacity increases as it goes from the left side to the right side on the x-axis. In each of FIGS. 5(a) and 5(b), the value indicated at the top is the value measured in the case of charging, and the value indicated at the bottom is the value measured in the case of discharging.

In Comparative Example 1 of FIG. 5(a), for readability instead of showing the values measured at each cycle on the graph, the values measured when charging and discharging were performed 1, 7, 12, 15, and 18 times are shown on the graph, and in Example of FIG. 5(b), the values measured when charging and discharging were performed 2, 5, 10, 15, 20, 25, 35, 40, 45, and 50 times are shown on the graph. As described above, in Example of FIG. 5(b), the lifetime of the battery cell is longer than in Comparative Example 1 of FIG. 5(a), and therefore, the number of charge/discharge cycles is greater.

In Example of FIG. 5(b), as can be seen from the part indicated by the dotted circle, it is confirmed that the voltage value versus the discharge capacity is measured to be almost constant regardless of the number of charge/discharge cycles. On the other hand, Comparative Example 1 of FIG. 5(a) has different voltage values depending on the number of charge/discharge cycles as can be seen from the part indicated by the dotted circle. This means that the stability of the battery cell is significantly improved in Example of FIG. 5(b) compared to Comparative Example 1 of FIG. 5(a).

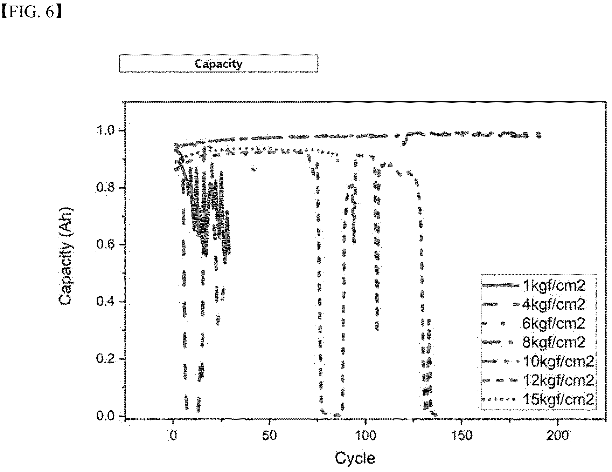

FIGS. 6 to 8 are graphs showing the results of tests conducted while increasing the number of charge/discharge cycles by differently setting the pressure applied to the battery cell in the case of the constant-position pressurization method. The test was performed under the same measurement conditions as those of FIG. 4. In the case of the constant-position pressurization method, as the pressure is lower, the actual realization and design of the battery pack are more advantageous, and therefore, tests were performed to find the optimal (lowest) pressurization conditions.

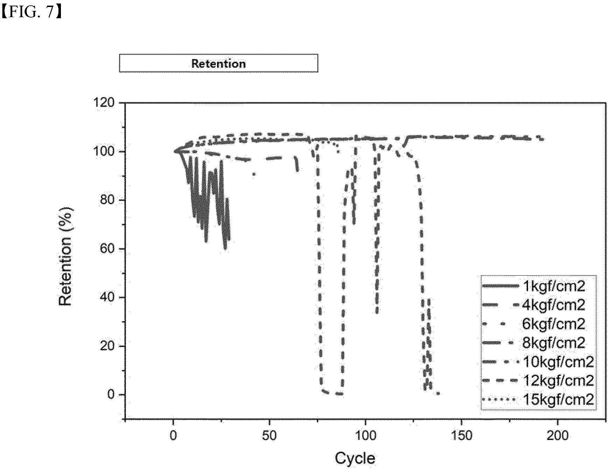

FIGS. 6 and 7 show graphs of discharge capacity and capacity retention measured each time per charge/discharge cycle, respectively. The x-axis represents the number of charge/discharge cycles, and the y-axis represents the discharge capacity and the capacity retention, respectively. The capacity retention is an indicator showing how much the capacity changes based on the first cycle capacity.

The test results for the cases where the pressure applied to the battery cell is 1 kgf/cm², 4 kgf/cm², 6 kgf/cm², 8 kgf/cm², 10 kgf/cm², 12 kgf/cm², and 15 kgf/cm² are shown on the graphs, respectively. In the graphs, the upper value represents the measured discharge capacity, and the lower value represents the measured capacity retention.

First, when the applied pressure is 1 kgf/cm², it is the same as the upper graph of Comparative Example 1 in FIG. 4(a), and when the applied pressure is 8 kgf/cm², it is the same as the upper graph of Example 1 in FIG. 4(b). When the battery cell is pressurized under a pressure of 1 kgf/cm², it can be seen that as described above in FIG. 4(a), the discharge capacity and capacity retention are measured as values having large deviations for each cycle when charging and discharging are repeated. That is, it shows a fluctuating graph. This means that the stability of the battery cell is significantly reduced. When the applied pressure is 4 kgf/cm², both normal operation and non-normal operation are observed. Therefore, it can be interpreted as showing slightly better results than when the applied pressure is 1 kgf/cm², but as the C/E fluctuation range became larger and early degradation occurred.

When the applied pressure is 6 kgf/cm², the discharge capacity and capacity retention rate values are measured to be relatively constant for each cycle when charging and discharging are repeated, but it can be seen that the battery lifetime is shortened due to the early degradation phenomenon.

Even when the applied pressure is 12 kgf/cm², it can be seen that the discharge capacity and capacity retention values are measured as values having large deviations for each cycle when charging and discharging are repeated. When the applied pressure is 15 kgf/cm², it can be seen that the effective number of charge/discharge cycles is significantly reduced. This is because when the applied pressure is too high, the separator is compressed, reducing the amount of residual electrolyte, which has a negative effect on the performance. In addition, the possibility of occurrence of a short circuit also increases.

On the other hand, when the applied pressure is 8 kgf/cm² and when the pressure is 10 kgf/cm², they show considerably excellent results. It can be seen that even after the charge/discharge cycles were repeated, the discharge capacity and capacity retention values were measured to be constant, and the discharge capacity value of the battery cell is also higher. When the applied pressure is 8 kgf/cm², the explanation overlaps with that in FIG. 4(b), so refer to those set forth above.

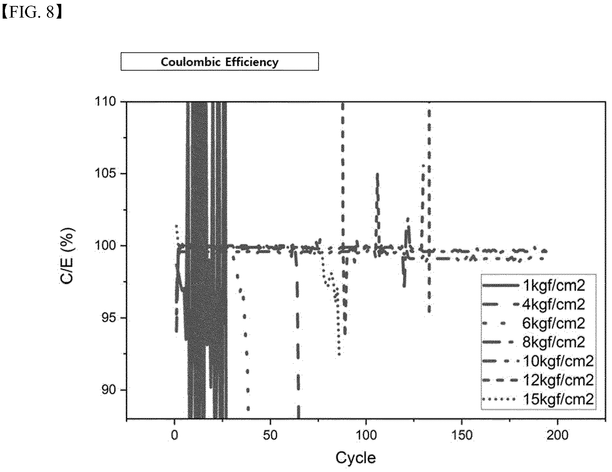

FIG. 8 shows a graph of C/E (coulombic efficiency) measured each time per charge/discharge cycle. The test results for the cases where the pressure applied to the battery cell is 1 kgf/cm², 4 kgf/cm², 6 kgf/cm², 8 kgf/cm², 10 kgf/cm², 12 kgf/cm², and 15 kgf/cm², respectively, are shown on the graph. Similarly, when the applied pressure is 1 kgf/cm², it is the same as the lower graph of Comparative Example 1 in FIG. 4(a), and when the applied pressure is 8 kgf/cm², it is the same as the lower graph of Example 1 in FIG. 4(b).

In FIG. 8, it can be seen that when the applied pressure is 1 kgf/cm² and 4 kgf/cm², the C/E was measured as values having large deviations for each cycle when the charging and discharging are repeated. In other words, it shows a fluctuating graph. This means that the stability of the battery cell is significantly reduced.

When the applied pressure is 6 kgf/cm², it can be seen that the C/E maintains a relatively stable value for each cycle when charging and discharging is repeated, but the battery lifetime is shortened due to the early degeneration phenomenon.

In addition, even when the applied pressure is 12 kgf/cm², it can be seen that the C/E was measured as values having large deviations for each cycle when the charging and discharging are repeated. In other words, it shows a fluctuating graph. It means that the stability of the battery cell is significantly reduced. Further, when the applied pressure is 15 kgf/cm², it can be seen that the effective number of charge/discharge cycles is significantly reduced. This is because when the applied pressure is too high, the separator is compressed, and the amount of residual electrolyte is reduced, which has a negative effect on the performance. In addition, the possibility of occurrence of a short circuit also increases.

On the other hand, when the pressurizing force was 8 kgf/cm² and 10 kgf/cm², the C/E value was measured to be constant even after the charge/discharge cycles were repeated. In particular, when the pressurizing force was 8 kgf/cm² and 10 kgf/cm², the effective number of charge/discharge cycles also increased, thereby showing excellent results.

Even referring to the results of FIGS. 6, 7 and 8, it can be seen that in the case of the constant-position pressurization method, the pressure applied to the battery cell during charge and discharge of the lithium metal battery is suitably 7 kgf/cm² or more and 12 kgf/cm² or less, or 8 kgf/cm² or more and 11 kgf/cm² or less.

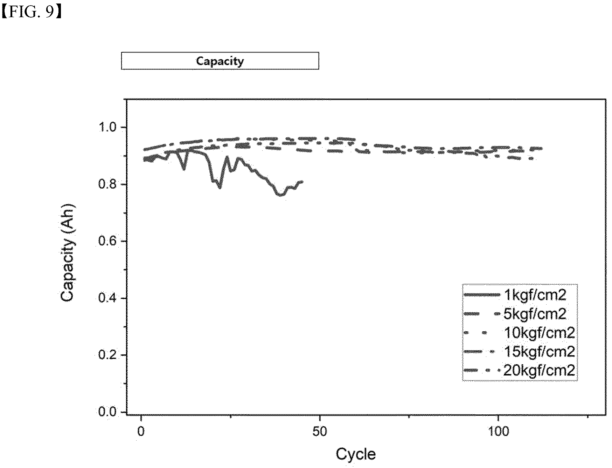

FIGS. 9 to 11 are graphs showing the results of tests conducted while increasing the number of charge/discharge cycles by differently setting the pressure applied to the battery cell in the case of the constant-variable pressure pressurization method. In the case of the constant-pressure pressurization method, as the applied pressure is lower, the actual realization and design of the battery pack are more advantageous, and therefore, tests were conducted to find the optimal (lowest) pressurization conditions.

Even in the case of FIGS. 9 to 11, tests were performed under the same measurement conditions as those of FIG. 4, except that the constant-variable pressure pressurization method was used. In addition, as described above, the constant-variable pressure pressurization method is a case where the constant-position pressurization method is partially modified, wherein an elastic member 140 (see FIG. 3) is interposed, and the spring constant of the elastic member (i.e., spring) used in this test is 160 kgf/mm (40 kgf/mm × 4 = 160 kgf/mm).

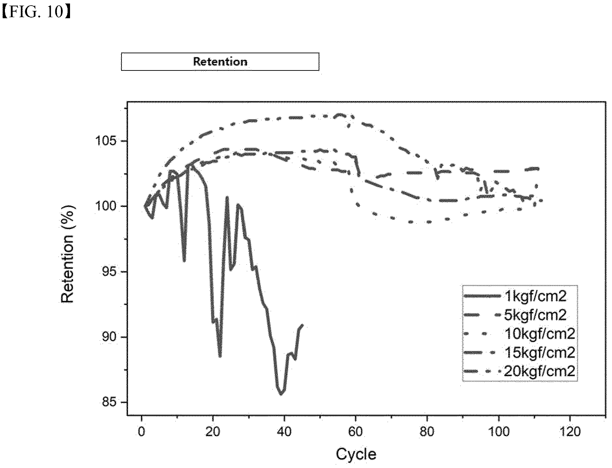

FIGS. 9 and 10 show graphs of discharge capacity and capacity retention measured each time per charge/discharge cycle, respectively. The x-axis represents the number of charge/discharge cycles, and the y-axis represents the discharge capacity and the capacity retention, respectively. The capacity retention is an indicator showing how much the capacity changes based on the first cycle capacity.

The test results for the cases where the pressure applied to the battery cell is 1 kgf/cm², 5 kgf/cm², 10 kgf/cm², 15 kgf/cm², and 20 kgf/cm² are shown on the graph. In the graph, the upper value represents the measured discharge capacity, and the lower value represents the measured capacity retention.

First, when the applied pressure is 1 kgf/cm², the results show that the discharge capacity and capacity retention for each cycle of repeated charge and discharge are relatively unstable. This is interpreted as bring about the results shown in FIGS. 9 and 10 because the interface between the positive electrode/separator/negative electrode of the lithium metal battery is not properly pressed.

On the other hand, when the applied pressure is 5 kgf/cm², 10 kgf/cm², 15 kgf/cm², and 20 kgf/cm², the discharge capacity and capacity retention values were measured to be constant even after charge/discharge cycles were repeated, thereby showing considerably excellent results.

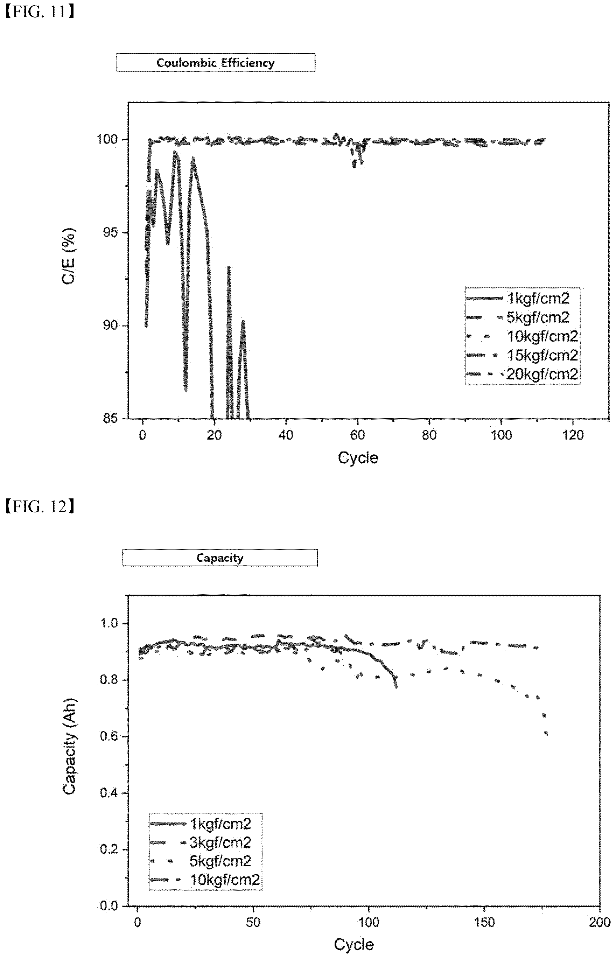

FIG. 11 shows a graph of C/E (Coulombic efficiency) measured each time per charge and discharge cycle. The test results for the cases where the pressure applied to the battery cell is 1 kgf/cm², 5 kgf/cm², 10 kgf/cm², 15 kgf/cm², and 20 kgf/cm² are shown on the graph, respectively.

When the applied pressure is 1 kgf/cm², it can be seen that the C/E was measured as values having large deviations for each cycle when the charging and discharging were repeated. In other words, it shows a fluctuating graph. This means that the stability of the battery cell is significantly reduced. On the other hand, when the applied pressure is 5 kgf/cm², 10 kgf/cm², 15 kgf/cm², and 20 kgf/cm², the C/E value was measured to be constant even when the number of charge/discharge cycles was repeated. Even referring to the results of FIGS. 9 to 11, in the case of the constant-variable voltage pressurization method, it can be seen that the pressure applied to the battery cell during the charge and discharge of the lithium metal battery is suitably 4 kgf/cm² or more and 30 kgf/cm² or less, or 5 kgf/cm² or more and 25 kgf/cm² or less. For reference, when the pressure is 20 kgf/cm², the increase in the numerical value at 0 in the first cycle of C/E does not mean a significant value. That is, the increase in the numerical value in the first cycle may vary depending on the degree of activation, and does not mean a large fluctuation range.

FIGS. 12 to 14 are graphs showing the results of tests conducted while increasing the number of charge/discharge cycles by differently setting the pressure applied to the battery cell in the case of a constant-pressure pressurization method. The tests were performed under the same measurement conditions as those of FIG. 4. In the case of the constant-pressure pressurization method, as the pressurizing force is lower, the actual realization and design of the battery pack are more advantageous, and therefore, tests were performed to find the optimal (lowest) pressurization conditions.

In the case of FIGS. 12 to 14, tests were performed under the same measurement conditions as those of FIG. 4, except that the constant-pressure pressurization method was used.

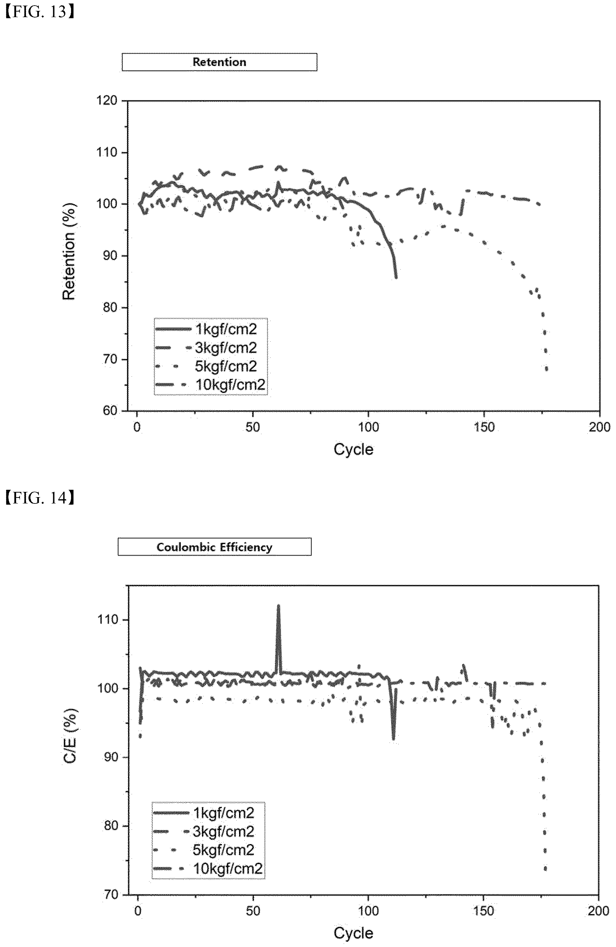

FIGS. 12 and 13 show graphs of discharge capacity and capacity retention measured each time per charge/discharge cycle, respectively. The x-axis represents the number of charge/discharge cycles, and the y-axis represents the discharge capacity and the capacity retention, respectively. The capacity retention is an indicator showing how much the capacity changes based on the first cycle capacity.

The test results for cases where the pressure applied to the battery cell is 1 kgf/cm², 3 kgf/cm², 5 kgf/cm², and 10 kgf/cm² are shown on the graph. The upper value in the graph represents the measured discharge capacity, and the lower value represents the measured capacity retention.

First, when the applied pressure is 1 kgf/cm² and when the applied pressure is 3 kgf/cm², early degradation phenomena occurred. This means that the discharge capacity and capacity retention for each cycle in which charge and discharge are repeated are not maintained for a long time, and the battery lifetime is shortened. This is interpreted as bring about the result shown in FIGS. 12 and 13 because the interface between the positive electrode/separator/negative electrode of the lithium metal battery is not properly pressed.

It can be seen that when the applied pressure was 5 kgf/cm², early degradation phenomena did not occur, and the cycle lasted longer than when the applied pressure is 1 kgf/cm² and when the applied pressure is 3 kgf/cm², but as the number of charge/discharge cycles increased, the discharge capacity decreased, which resulted in a decrease in performance.

On the other hand, when the applied pressure was 10 kgf/cm², the discharge capacity and capacity retention values were measured to be relatively constant even after charge/discharge cycles were repeated.

FIG. 14 shows a graph of C/E (Coulombic efficiency) measured each time per charge/discharge cycle. The test results for the cases where the applied pressure to the battery cell was 1 kgf/cm², 3 kgf/cm², 5 kgf/cm², and 10 kgf/cm² are shown on the graph, respectively.

In FIG. 14, when the applied pressure was 1 kgf/cm² and 3 kgf/cm², it was measured that the C/E fluctuation range was large, which means that a micro-short occurs or precipitation occurs on the positive electrode during discharging. This means that it has a serious impact on the battery cell or that the lifetime of the battery cell is shortened.

Even when the applied pressure is 5 kgf/cm², it is better than when the applied pressurize is 1 kgf/cm² and when the applied pressure is 3 kgf/cm², but it can be seen that the C/E fluctuation range is large.

On the other hand, when the applied pressure was 10 kgf/cm², the C/E value was measured to be relatively constant even after the charge/discharge cycles were repeated.

Even referring to the results of FIGS. 12 to 14, in the case of the constant-pressure pressurization method, it can be seen that the pressure applied to the battery cell during charge and discharge of the lithium metal battery is suitably 10 kgf/cm² or more and 30 kgf/cm² or less, or 10 kgf/cm² or more and 25 kgf/cm² or less.

Although the invention has been described in detail above with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Symbols]

10: battery cell
110: pressurizing member
120: driving unit
130: measuring unit
140: elastic member

## Claims

1. A lithium metal battery, comprising:
an electrode assembly including a positive electrode, a negative electrode, and a separator interposed between the positive electrode and the negative electrode;
an electrolyte that impregnates the electrode assembly; and
a battery case that incorporates the electrode assembly and the electrolyte,
wherein the negative electrode comprises a negative electrode current collector and a lithium metal layer formed on at least one surface of the negative electrode current collector, and
wherein the lithium metal battery is charged and discharged under a state where a pressure of 2 kgf/cm² or more and 30 kgf/cm² or less is applied thereto.

2. The lithium metal battery according to claim 1, wherein:
pressure is applied to the lithium metal battery by a constant-position pressurization method, and
the pressure applied to the lithium metal battery is 7 kgf/cm² or more and less than 12 kgf/cm².

3. The lithium metal battery according to claim 2, wherein:
the pressure applied to the lithium metal battery is 8 kgf/cm² or more and 11 kgf/cm² or less.

4. The lithium metal battery according to claim 1, wherein:
pressure is applied to the lithium metal battery by a constant-variable pressure pressurization method, and
the pressure applied to the lithium metal battery is 4 kgf/cm² or more and 30 kgf/cm² or less.

5. The lithium metal battery according to claim 4, wherein:
the pressure applied to the lithium metal battery is 5 kgf/cm² or more and 25 kgf/cm² or less.

6. The lithium metal battery according to claim 4 or 5, wherein:
the equivalent spring constant of the elastic member applied to the constant-variable pressure pressurization method is 60 kgf/mm or more and 1000 kgf/mm or less.

7. The lithium metal battery according to claim 1, wherein:
pressure is applied to the lithium metal battery by a constant-pressure pressurization method, and
the pressure applied to the lithium metal battery is 10 kgf/cm² or more and 30 kgf/cm² or less.

8. The lithium metal battery according to claim 7, wherein:
pressure is applied to the lithium metal battery by a constant-pressure pressurization method, and
the pressure applied to the lithium metal battery is 10 kgf/cm² or more and 25 kgf/cm² or less.

9. The lithium metal battery according to claim 1, wherein:
the lithium metal battery is a pouch-type lithium metal battery.

10. The lithium metal battery according to claim 1, wherein:
the lithium metal battery is mounted on a pressurizing jig, and pressure is applied by the pressurizing jig.

11. A battery module comprising: a battery cell stack in which a plurality of battery cells are stacked; and a module case that houses the battery cell stack,
wherein the battery cell is the lithium metal battery according to claim 1.

12. The battery module according to claim 11, wherein:
when the pressurizing method for the lithium metal battery is a constant-pressure pressurization method, within the module case, a pressurizing member in which the distance from the large area of the battery cell is variably installed, a driving unit capable of moving the pressurizing member, a measuring unit that measures the pressure applied to the pressurizing member, and a control unit that receives input of data measured from the measuring unit and adjusts the pressure applied to the pressurizing member to a constant level are further comprised.

13. The battery module according to claim 11, wherein:
when the pressurizing method for the lithium metal battery is a constant-variable pressure pressurization method, an elastic member is further comprised within the module case.

14. A battery pack comprising the battery module according to claim 11, and a pack case that houses the battery module.
